# EUROPEAN PATENT SPECIFICATION

(11) **EP 1 675 456 B1**
(45) Date of publication and mention of the grant of the patent: **01.02.2012**
(21) Application number: 04768635.7
(22) Date of filing: 27.09.2004
(51) Int. Cl.: A01M 29/00

(54) **BIRD DETERRENT DEVICE**
VORRICHTUNG ZUM ABSCHRECKEN VON VÖGELN
DISPOSITIF POUR EFFAROUCHER LES OISEAUX

(30) Priority: 27.09.2003 GB 0322678
(43) Date of publication of application: 05.07.2006
(73) Proprietor: P. & L. Systems Limited, Grimbald Crag Court Knaresborough, North Yorkshire HG5 8QB (GB)
(72) Inventor: KNIGHT, Peter, North Yorkshire HG5 8QB (GB)
(74) Representative: Best, Rachel Elizabeth
(86) International application number: PCT/GB2004/004091
(87) International publication number: WO 2005/029955

(56) References cited:
- WO-A-2004/017730
- DE-U1- 9 212 573
- US-A- 3 282 000

## Description

The present invention relates to a bird deterrent device and a method of producing same.

A known bird deterrent device comprises relatively thin elongate base member made of plastics and a plurality of thin elongate rods (spikes) that extend from the base. In one known example a free end of each rod is captured in the base during the moulding process to extend upwardly from the base in one or more planes that are disposed perpendicular to the plane of a mounting surface of the base member. The spokes may be bent subsequently to define two or more rows of spikes that are inclined relative to the base and one another. In a variation, pairs of spikes are formed as U-shaped or V-shaped elements with the connecting portion being captured in the base. Again they may be bent subsequent to their association with the base.

US-A-3,282000 describes a bird proofing device comprising an elongated strip-type base support having a bottom surface, side walls extending upwardly from said bottom surface and a top wall joining said side walls and spaced apart from said bottom surface, at least one of said side and top walls having a plurality of recessed sockets spaced therealong, and a plurality of sharply pointed shaft elements having end plugs which fit releasably but tightly into the recessed sockets. A different construction of a bird deterrent device is known from DE-U-92 12573 which device has an elongate moulded strip base and a plurality of thin bent wires projecting from the base.

It has been found that bird deterrents of this general type can be more effective when there are multiple rows of spikes extending upwards at different angles from the base so as to give a wide range of coverage at the free end of the spikes from a relatively small elongate base. However, with the known designs, increasing the number of rows of spikes necessarily increases the volumetric space occupied by the deterrents even before the rows are bent into their position of use, and this is true even in relation to a single row of spikes according to the above design where the width of the base dictates the minimum width, and the breadth being dictated by the length of the spikes. Thus existing designs do not present the most efficient use of volumetric space as far as packaging, storage and transportation of the product is concerned.

Accordingly, the invention aims to provide a more space effective construction.

The elongate base of the above-mentioned bird deterrent is provided with through apertures at spaced intervals along the length thereof to receive fixing means, be it for conventional screws or nails, or to capture adhesive applied to the base at spaced intervals coinciding with said apertures. Applying the fixing means at discreet positions is time consuming and another aspect of the invention aims to provide a solution.

Accordingly, the invention provides a method of manufacturing a bird deterrent device for deterring birds from landing on a selected surface, the method comprising positioning a plurality of elongate rods (spikes) in spaced side by side relation with a portion thereof in a mould for an elongate base member, and with said rods being disposed in a plane substantially parallel to mounting surface of said elongate base member, causing moulding material to be introduced into the mould to form the base around said portions, and allowing the moulding material to set at least sufficiently to allow removal from the mould.

The resulting product is a generally planar structure. Since the rods are thinner than the depth of the elongate base member, it is the latter that determines the storage/transportation space occupied by the product in conjunction with the length of the elongate member and the length of the spikes. Consequently it occupies less space than the known devices where the width of the base rather than its depth represents one of its minimum dimensions.

Said portion may be an end portion. More particularly, said portion is a position intermediate the opposite ends of the rods.

The method further comprises bending the opposite ends of the rods to dispose the ends of the rods at a desired angle displaced from the as formed position parallel to the mounting surface of the base, to planes that are inclined with respect to the base. Most usually for the further preferred embodiment the opposite ends of one rod are displaced in two different planes, and, most usually still, planes that are also inclined relative to one another. Exceptionally at least one end may be displaced to be in a plane perpendicular to the base.

More particularly, to benefit from the reduced packaging, storage and transportation space of the device as moulded, it is preferred that the step of bending is performed on site prior to installation, or at least at a location remote from that of initial production. The plurality of rods may be of all the same length or of different lengths.

In one embodiment, the rods are positioned in the mould so that the said intermediate portions are disposed in side by side alignment. However in a preferred embodiment the intermediate portions occupy two or more different laterally disposed positions relative to a longitudinal axis of the elongate base member. In such a preferred embodiment, the elongate base member is configured such that the rods emerge from the opposite sides thereof at different lateral positions according to the positions of the intermediate portions. More particularly, there will be a plurality of rods disposed in each of the displaced lateral positions. By this means, when the projecting ends of the rods are subsequently bent, each projecting end forms a distinct row for each lateral position.

In another embodiment, of the method the elongate base is defmed by a lower mounting surface, an up side and opposite side edges and the base has apertures moulded therein to receive elongate rods (spikes), and wherein the apertures are disposed in at least one side edge of the elongate base and extend in a plane that is substantially parallel to the base to receive the rods in a direction with the free ends projecting outwardly from said sides. The apertures may be through apertures whereby a rod is inserted into opposite ends thereof, or more particularly where one rod inserted therein projects from both ends thereof.

In a preferred embodiment the rods are disposed in a plane that is parallel to the plane of the mounting surface of the base. However, it will be appreciated that the plane of the rods could be inclined to a relatively small degree, eg: by up to 15° without departing from the essence of the invention and compromising the volumetric efficiencies of the construction.

Preferably the rods project from at least one side of the base. More preferably there are rods that project from opposite sides of the base. More preferably still each rod projects from opposite sides of the base. Yet more preferably the rods have two or more laterally displaced positions relative to the base to form a respective row of spikes when the rods are bent into their operative position. In this context rows are determined by the position that the rods emerge from the base, although the rows will usually be bent to have the spikes thereof disposed at substantially the same inclination relative to the base.

The present invention will now be described further hereinafter, by way of example only, with reference to the accompanying drawings, in which:-
Figure 1 is a plan view of a bird deterrent device according to the invention,
Figure 2 is a view on (A) of Figure 1,
Figure 3 is a side view of apparatus using manufacturing a bird deterrent device according to the invention,
Figure 4 is a view on the (B) Figure 3,
Figure 5 is an end view of a bird deterrent device according to the embodiment of Figures 1 and 2 as it emerges from the manufacturing apparatus prior to bending of the bird spikes,
Figure 6 is a plan view of a fragment of bird deterrent device according to a second embodiment,
Figure 7 is a view on (C) of Figure 6,
Figure 8 is a plan view of a fragment of a third embodiment of a bird deterrent device according to the invention, and
Figure 9 is a view on (D) of Figure 8.

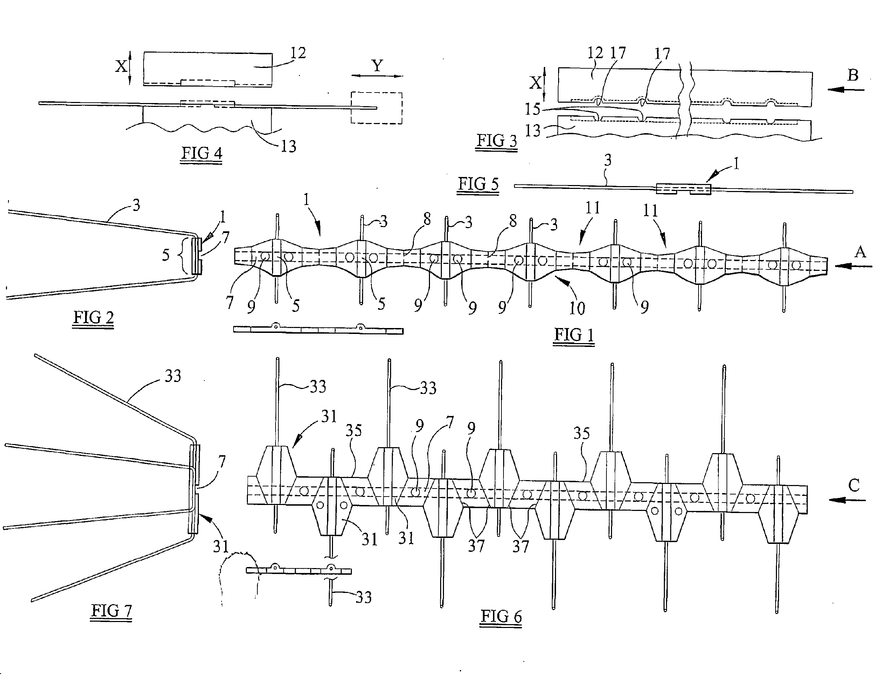

Referring firstly to figures 1 and 2, a bird deterrent device according to the invention comprises an elongate base member 1 moulded from plastics material and plurality of thin elongate rods 3 having a portion 5 thereof intermediate the ends thereof captured in the base member. In the illustrated embodiment the base member has a groove 7 running along the underside of the base member in the longitudinal direction thereof. The base member has a plurality of through bores 9 which communicate directly with the groove 7. In the illustrated embodiment the base is formed in discrete lengths consisting of seven rod receiving portions 10 with intervening connecting portions 11 of reduced width. The increase in width of the elongate receiving portions serves to stabilise the elongate base in its position of use, whilst the wasted portions reduce the amount of material required for the base member. Lines of weakness 8 may be formed in the wasted portions to facilitate reproducing the length of standard unit from the seven units illustrated to any lesser desired number to make up the require length for a particular application. Several of the devices would be used in combination to fit the desired space to be protected.

According to one embodiment the base member is formed as a plastic moulding and conveniently the mould comprises upper and lower halves 12,13 which are axially vertically separable as represented by arrow X in figures 3 and 4. The shape of the elongate body member is formed by recessing in the two halves with the split line being aligned with location of the elongate rods for which purpose the upper and lower halves have semi circular grooves 15,17. According to the preferred method of manufacture the plurality of elongate rods are placed into the grooves of the lower mould and the top mould closed down onto the bottom mould. Alternatively the rods which are straight elongate rods maybe introduced after closure of the moulds by insertion in an axial direction as represented by arrow Y. With the rods in position and the moulds closed, moulding material is introduced to capture the rods. When removed from the mould the device looks as illustrated in figure 5 from which it can be seen that the product is substantially planar. When the product is required for use the opposite ends of the rod are bent up to the desired angle an example of which is shown in figure 2. Thus it will be appreciated that that the product emerging from the mould occupies less space than the finished product which is extremely advantageous for the purposes of packing, storage and transportation prior to configuration for use.

Figure 6 and 7 show an alternative embodiment in which the elongate base member has the portions 31 for capturing the rods 33 disposed in alternating staggered rows and disposed to one and the other side of the longitudinal centre line of the elongate base. The construction enables four rows of bird spikes to be created much in the same manner as that for the embodiment for figures 1 and 2 and the device has corresponding features such as the elongate groove 7 aligned with through bores 9, lines of weakness 37 defined by each polygonal rod mounting portion 31 for trimming the elongate member to any desired length. The polygonal (six sided in the illustration) portions 31 are separated by connecting portions 35. The connecting portions have the through bores 9.

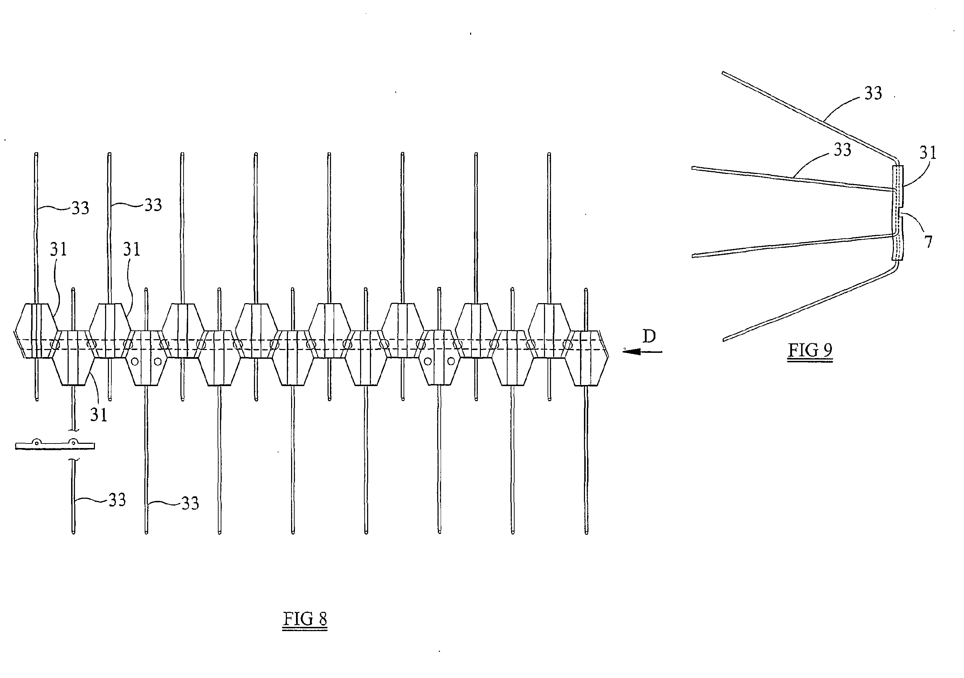

Finally, figures 8 and 9 show an alternative embodiment in which the connecting portions 35 of figures 6 and 7 embodiment are omitted and the rod receiving portions 31 mate directly within an adjacent rod receiving portion 31 with the lines of weakness 43 there between. This embodiment provides increased lengthwise density for the bird spikes. Again the device has features in common with the other embodiment with regard to the longitudinal groove aligned with through bores. The method of manufacture is the same as that for the embodiment of figures 1 and 2.

## Claims

1. A method of manufacturing a bird deterrent device for deterring birds from landing on a selected surface, the method comprising positioning a plurality of elongate rods or spikes (3, 33) in spaced side-by-side relation with a portion thereof in a mould for an elongate base member (1), and with said rods or spikes being disposed in a plane substantially parallel to a mounting surface of said elongate base member, causing moulding material to be introduced into the mould to form the base around said portions, and allowing the moulding material to set at least sufficiently to allow removal from the mould.

2. A method as claimed in claim 1 in which said portion is an end portion.

3. A method as claimed in claim 1 in which said portion is a portion intermediate the opposite ends of the rods or spikes (3, 33).

4. A method as claimed in any one of claims 1 to 3, further comprising the step of bending the opposite ends of the rods or spikes (3, 33) to dispose the ends of the rods or spikes at a desired angle displaced from the as-formed position parallel to the mounting surface of the base (1), to planes that are inclined with respect to the base.

5. A method as claimed in claim 3 and further comprising displacing the opposite ends of one rod or spike into two different planes.

6. A method as claimed in claim 5 and further comprising displacing the opposite ends so that they lie in planes that are inclined relative to one another.

7. A method as claimed in any one of claims 4 to 6 in which at least one end is displaced to be in a plane perpendicular to the base.

8. A method as claimed in any one of claims 4 to 7 in which the step of bending is performed on-site prior to installation, or at least at a location remote from that of initial production.

9. A method as claimed in any one of claims 1 to 8 comprising the step of using rods or spikes that are all the same length or of different lengths.

10. A method as claimed in claim 3 and further comprising positioning the rods or spikes in the mould so that the said intermediate portions are disposed in side-by-side alignment.

11. A method as claimed in claim 3 and further comprising positioning the intermediate portions to occupy two or more different laterally disposed positions relative to a longitudinal axis of the elongate base member (1).

12. A method as claimed in claim 3 and further comprising configuring the elongate base member (1) such that the rods or spikes emerge from the opposite sides thereof at different lateral positions according to the positions of the intermediate portions.

13. A method as claimed in claim 12 and further providing a plurality of rods or spikes disposed in each of the displaced lateral positions.

14. A method as claimed in claim 13 and further comprising bending the projecting ends of the rods or spikes so that each projecting end forms a distinct row for each lateral position.

15. A method as claimed in any one of claims 1 to 14, in which the rods or spikes are disposed at up to 15° to the plane of the base.

## Patentansprüche

1. Verfahren zur Herstellung einer Vorrichtung, um Vögel vom Landen auf einer gewählten Fläche abzuschrecken, wobei das Verfahren folgende Schritte umfasst: man positioniert mehrere längliche Stäbe oder Dorne (3, 33) beabstandet nebeneinander mit einem Abschnitt davon in einer Form für ein längliches Basiselement (1) und wenn die Stäbe oder Dorne in einer im Wesentlichen parallel zu einer Montagefläche des länglichen Basiselements verlaufenden Ebene angeordnet sind, veranlasst man, dass Formmaterial in die Form eingeführt wird, um die Basis um die Abschnitte herum zu bilden, und man lässt das Formmaterial mindestens ausreichend abbinden, dass ein Herausnehmen aus der Form möglich ist.

2. Verfahren nach Anspruch 1, wobei der Abschnitt ein Endabschnitt ist.

3. Verfahren nach Anspruch 1, wobei der Abschnitt ein Abschnitt wischen den gegenüberliegenden Enden der Stäbe oder Dorne (3, 33) ist.

4. Verfahren nach einem der Ansprüche 1 bis 3, ferner mit dem Schritt des Biegens der gegenüberliegenden Enden der Stäbe oder Dorne (3, 33), um die Enden der Stäbe oder Dorne in einem gewünschten Winkel anzuordnen, verschoben von der Position nach dem Formen parallel zur Montagefläche der Basis (1) zu Ebenen, die bezüglich der Basis geneigt sind.

5. Verfahren nach Anspruch 3 und ferner mit dem Schritt des Verschiebens der gegenüberliegenden Enden eines Stabs oder Dorns in zwei verschiedene Ebenen.

6. Verfahren nach Anspruch 5 und ferner mit dem Schritt des Verschiebens der gegenüberliegenden Enden, so dass sie in Ebenen liegen, die bezüglich einander geneigt sind.

7. Verfahren nach einem der Ansprüche 4 bis 6, wobei mindestens ein Ende so verschoben ist, dass es in einer senkrecht zur Basis verlaufenden Ebene liegt.

8. Verfahren nach einem der Ansprüche 4 bis 7, wobei der Biegeschritt vor Ort vor der Installierung oder zumindest an einem vom ursprünglichen Produktionsort abgelegenen Ort durchgeführt wird.

9. Verfahren nach einem der Ansprüche 1 bis 8, mit dem Schritt des Verwendens von Stäben oder Dornen, die alle gleich lang oder unterschiedlich lang sind.

10. Verfahren nach Anspruch 3 und ferner mit dem Schritt des Positionierens der Stäbe oder Dorne in der Form, so dass die Zwischenabschnitte nebeneinander ausgerichtet angeordnet sind.

11. Verfahren nach Anspruch 3 und ferner mit dem Schritt des Positionierens der Zwischenabschnitte, so dass sie zwei oder mehr unterschiedliche lateral angeordnete Positionen bezüglich einer Längsachse des länglichen Basiselements (1) einnehmen.

12. Verfahren nach Anspruch 3 und ferner mit dem Schritt des Konfigurierens des länglichen Basiselements (1), so dass die Stäbe oder Dorne aus den gegenüberliegenden Seiten davon an unterschiedlichen lateralen Positionen gemäß den Positionen der Zwischenabschnitte hervortreten.

13. Verfahren nach Anspruch 12 und ferner mit dem Schritt des Bereitstellens mehrerer Stäbe oder Dorne, die jeweils in den verschobenen lateralen Positionen angeordnet sind.

14. Verfahren nach Anspruch 13 und ferner mit dem Biegen der vorragenden Enden der Stäbe oder Dorne, so dass jedes vorragende Ende eine separate Reihe für jede laterale Position bildet.

15. Verfahren nach einem der Ansprüche 1 bis 14, wobei die Stäbe oder Dorne bei bis zu 15° zur Ebene der Basis angeordnet sind.

## Revendications

1. Procédé de fabrication d'un dispositif pour repousser les oiseaux, pour empêcher que des oiseaux ne se posent sur une surface sélectionnée, le procédé comprenant le positionnement d'une pluralité de tiges ou pointes allongées (3, 33) en relation juxtaposée et espacée, avec une portion de celles-ci dans un moule pour un organe de base allongé (1), lesdites tiges ou pointes étant disposées dans un plan substantiellement parallèle à une surface de montage dudit organe de base allongé, l'introduction de matériau de moulage dans le moule pour former la base autour desdites portions, et le durcissement du matériau de moulage au moins suffisamment pour en permettre le retrait du moule.

2. Procédé selon la revendication 1, dans lequel ladite portion est une portion d'extrémité.

3. Procédé selon la revendication 1, dans lequel ladite portion est une portion intermédiaire entre les extrémités opposées des tiges ou pointes (3, 33) .

4. Procédé selon l'une quelconque des revendications 1 à 3, comprenant en outre l'étape consistant à recourber les extrémités opposées des tiges ou pointes (3, 33) pour disposer les extrémités des tiges ou pointes suivant un angle souhaité de manière déplacée par rapport à la position de formation initiale parallèle à la surface de montage de la base (1), dans des plans inclinés par rapport à la base.

5. Procédé selon la revendication 3, comprenant en outre le déplacement des extrémités opposées d'une tige ou pointe dans deux plans différents.

6. Procédé selon la revendication 5, comprenant en outre le déplacement des extrémités opposées de telle sorte qu'elles se situent dans des plans qui sont inclinés l'un par rapport à l'autre.

7. Procédé selon l'une quelconque des revendications 4 à 6, dans lequel au moins une extrémité est déplacée de manière à être dans un plan perpendiculaire à la base.

8. Procédé selon l'une quelconque des revendications 4 à 7, dans lequel l'étape consistant à recourber les tiges ou pointes est effectuée sur place avant l'installation, ou au moins en un emplacement éloigné de celui de la production initiale.

9. Procédé selon l'une quelconque des revendications 1 à 8, comprenant l'étape consistant à utiliser des tiges ou pointes qui ont toutes la même longueur ou qui ont des longueurs différentes.

10. Procédé selon la revendication 3, comprenant en outre le positionnement des tiges ou pointes dans le moule de telle sorte que lesdites portions intermédiaires soient disposées en alignement juxtaposé.

11. Procédé selon la revendication 3, comprenant en outre le positionnement des portions intermédiaires de manière à ce qu'elles occupent deux positions différentes ou plus, disposées latéralement par rapport à un axe longitudinal de l'organe de base allongé (1).

12. Procédé selon la revendication 3, comprenant en outre l'étape consistant à configurer l'organe de base allongé (1) de telle sorte que les tiges ou pointes émergent des côtés opposés de celui-ci en différentes positions latérales en fonction des positions des portions intermédiaires.

13. Procédé selon la revendication 12, fournissant en outre une pluralité de tiges ou pointes disposées dans chacune des positions latérales déplacées.

14. Procédé selon la revendication 13, comprenant en outre l'étape consistant à recourber les extrémités saillantes des tiges ou pointes de manière à ce que chaque extrémité saillante forme une rangée distincte pour chaque position latérale.

15. Procédé selon l'une quelconque des revendications 1 à 14, dans lequel les tiges ou pointes sont disposées à un angle de jusqu'à 15° par rapport au plan de la base.
